# FASCICULE DE BREVET EUROPEEN

(11) **EP 3 928 032 B1**
(45) Date de publication et mention de la délivrance du brevet: **03.01.2024**
(21) Numéro de dépôt: 20710251.8
(22) Date de dépôt: 19.02.2020
(51) Int. Cl.: F23J 15/00

(54) **PROCÉDÉ DE TRAITEMENT DE FUMÉES D'UNITÉS DE COMBUSTION**
VERFAHREN ZUR BEHANDLUNG VON RAUCHGAS AUS VERBRENNUNGSANLAGEN
METHOD FOR TREATING FLUE GAS FROM COMBUSTION UNITS

(30) Priorité: 20.02.2019 FR 1901714; 04.07.2019 FR 1907460
(43) Date de publication de la demande: 29.12.2021
(73) Titulaire: Sarp Industries, 78520 Limay (FR)
(72) Inventeur: CHAUCHERIE, Xavier, 78000 VERSAILLES (FR); GILARDIN, Bruno, 27130 VERNEUIL D'AVRE ET D'ITON (FR); RAMOMBORDES, Corinne, 13655 ROGNAC (FR)
(74) Mandataire: Plasseraud IP
(86) Numéro de dépôt international: PCT/FR2020/050310
(87) Numéro de publication internationale: WO 2020/169928

(56) Documents cités:
- FR-A1- 2 981 732
- US-A1- 2010 203 461
- US-A1- 2011 250 111
- US-A1- 2017 100 618

## Description

### Domaine technique

La présente invention concerne la réduction de la concentration en gaz acides dans les fumées produites dans une unité de combustion, par exemple un incinérateur d'ordures ménagères ou de déchets dangereux industriels.

Actuellement en France, l'incinération est le deuxième mode d'élimination de déchets. Ces déchets proviennent aussi bien des ordures ménagères que des déchets dangereux industriels. La combustion de ces déchets entraîne l'émission de fumées contenant des gaz acides tels que des oxydes d'azote (NOₓ), de l'acide chlorhydrique (HCl) et du dioxyde de soufre (SO₂). Les gaz acides sont des polluants nocifs pour l'être humain ainsi que pour l'environnement, leur concentration maximale dans les fumées est donc fixée par des normes réglementaires. Par exemple, selon la norme réglementaire en vigueur (Directive 2000/76/CE) à 11 % O₂, les valeurs limites à l'émission, sont fixées à 200 mg/Nm³ pour les NOₓ (équivalent NO₂), à 10 mg/Nm³ pour HCl et à 50 mg/Nm³ pour SO₂.

### Technique antérieure

La diminution de la concentration en gaz acides contenus dans les fumées de combustion est classiquement réalisée par réaction desdits gaz acides avec un ou plusieurs réactifs neutralisants. Ces réactifs neutralisants sont choisis en fonction des gaz acides à traiter. Par exemple la concentration en NOx peut être réduite par un procédé de réduction sélective catalytique (SCR selon la dénomination anglais *Selective Catalytic Réduction*) ou non catalytique (SNCR selon la dénomination anglais *Selective Non-Catalytic Reduction*) en présence de réactifs neutralisants tels que l'ammoniac (NH₃) ou l'urée (CO(NH₂)₂). La SNCR est réalisée à haute température (autour de 950 °C), tandis que la SCR est réalisée à basse température (autour de 300 °C). Les concentrations en HCl et en SO₂ sont classiquement réduites par un procédé de formation de chlorures et de sulfates avec des réactifs neutralisants pouvant être la chaux, le bicarbonate de sodium ou la soude.

Ces procédés sont efficaces en routine mais ne permettent pas de toujours maintenir les concentrations en NOx, SO₂ et HCl sous les valeurs limites, en particulier lorsque des pics de concentrations de gaz acides apparaissent dans les fumées. Pour répondre à cette problématique, les réactifs neutralisants sont injectés en sur-quantité, ce qui entraine une consommation importante desdits réactifs neutralisants. Cette consommation importante entraine un surcoût considérable de matière première et nécessite de fréquents arrêts de maintenance.

Les réactifs neutralisants mis en jeu dans ces procédés sont également dangereux pour les opérateurs.

De plus, ces procédés peuvent générer de la corrosion et/ou provoquer l'encrassement des chaudières des unités de combustion de ce qui diminue la production d'énergie par lesdites chaudières.

Pour résoudre ce dernier problème, WO 2013/060991 décrit un réactif susceptible de neutraliser les gaz acides SO₂/HCl directement dans le four à combustion ou dans la chambre de post-combustion d'une unité de combustion. Ce réactif peut comprendre des produits à base de d'alcalins, d'alcalino-terreux, d'oxyde de calcium, de chaux hydratée, de calcaire, de sels carboxyliques de calcium, d'argiles et/ou des composés organiques réducteurs. Ce réactif ne comprend donc pas de sels d'ammonium. De plus, il n'est pas destiné à réduire la concentration de gaz acides autres que SO₂ et HCl, comme par exemple les NOx.

### Problème technique

Il existe donc toujours un besoin d'une solution efficace, sûre et économique pour diminuer la concentration d'une large gamme de gaz acides contenus dans les fumées produites dans une unité de combustion, telles que les incinérateurs d'ordures ménagères ou de déchets dangereux industriels.

Il est ainsi du mérite des inventeurs d'avoir trouvé qu'il était possible de répondre à ce besoin à l'aide d'une composition réactive pulvérulente comprenant un sel alcalino-terreux et un sel d'ammonium.

### Résumé de l'invention

Ainsi, un premier objet de l'invention est un procédé de traitement de fumées de combustion selon la revendication 1.

De façon avantageuse, le procédé selon l'invention permet de réduire efficacement la concentration en gaz acides dans les fumées de combustion.

Le procédé selon l'invention permet ainsi avantageusement de maintenir la concentration en gaz acides dans les fumées de combustion en dessous des valeurs fixées par les normes réglementaires même lorsque des pics de concentration en gaz acides apparaissent dans les fumées de combustion.

Le procédé selon l'invention est également plus économe et plus sûr que les procédés classiques de réduction de la concentration en gaz acides dans les fumées de combustion car :
- le coût de la composition pulvérulente est plus faible que celui des réactifs neutralisants classiquement utilisés, et
- la réduction efficace de la concentration en gaz acides dans les fumées de combustion permet une diminution significative de la consommation des réactifs neutralisants classiquement utilisés et, par conséquent une diminution des coûts et des risques liés auxdits réactifs neutralisants et une diminution des coûteux arrêts de maintenance.

Un second objet de l'invention est une composition pulvérulente selon la revendication 12.

### Brève description des dessins

**Fig. 1**

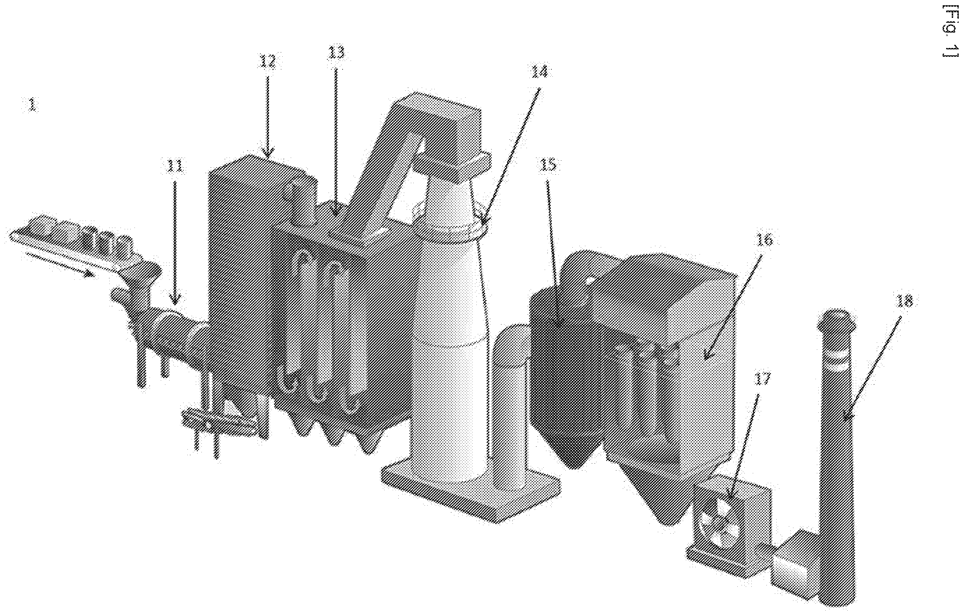

[Fig. 1] est un schéma illustrant une unité de combustion.

### Description détaillée de l'invention

Selon un premier objet, l'invention concerne un procédé de traitement de fumées de combustion comprenant des gaz acides, ledit procédé comprenant une étape a) de mise en contact desdits des gaz acides avec une composition pulvérulente comprenant un sel de métal alcalino-terreux et un sel d'ammonium sous atmosphère oxydante et à une température supérieure ou égale à 850°C, en particulier à une température comprise de 900°C à 1000°C, tout particulièrement de 940°C à 960°C.

Au sens de la présente invention, on entend par "fumées de combustion" des fumées produites dans une unité de combustion. Une unité de combustion est classiquement une installation industrielle destinée à incinérer des déchets, tels que des déchets non-dangereux ou dangereux, des boues municipales ou industrielles mais aussi à la combustion de la biomasse ou de charbon ou à la co-combustion charbon-biomasse.

Au sens de la présente invention, on entend par "composition pulvérulente" une composition à l'état de poudre. En particulier le diamètre maximum de la distribution volumique de 90% des particules (d90) de la composition pulvérulente selon l'invention peut être inférieure ou égale à 50 µm, de préférence de 2 µm à 10 µm, plus préférentiellement de 4 µm à 6 µm. La valeur d90 est déterminée par granulométrie laser en voie liquide dans l'eau distillée avec un granulomètre laser Malvern-Mastersizer 2000 équipé d'une cellule "small volume" de 120 ml, le signal est traité avec le modèle mathématique de Mie.

De façon avantageuse, une granulométrie dans les plages ci-dessus permet d'augmenter la surface de contact de la composition pulvérulente avec les gaz acides des fumées de combustion et ainsi d'augmenter l'efficacité de la réduction de la concentration en gaz acides des fumées de combustion.

Au sens de la présente invention, on entend par "sel de métal alcalino-terreux" un composé chimique comprenant un anion et un cation de métal alcalino-terreux, tel qu'un cation de béryllium (Be), de magnésium (Mg), de calcium (Ca), de strontium (Sr), de baryum (Ba), de radon (Ra) et leurs mélanges. De préférence, le sel de métal alcalino-terreux est choisi parmi un sel de magnésium, un sel de calcium et leurs mélanges. De préférence encore, il s'agit d'un sel de calcium

Au sens de la présente invention, on entend par "sel d'ammonium" un composé chimique comprenant un anion et un cation ammonium de formule brute NH₄⁺.

Au sens de la présente invention, on entend par "atmosphère oxydante" une atmosphère comprenant du dioxygène (O₂) et du dioxyde de carbone (CO₂). Typiquement la pression partielle de O₂ (PO₂) dans l'atmosphère oxydante est inférieure à 0,5 bar, plus particulièrement de 0,01 bar à 0,25 bar, tout particulièrement de 0,05 bar à 0,1 bar. Typiquement la pression partielle de CO₂ (PCO₂) dans l'atmosphère oxydante est inférieure à 0,5 bar, plus particulièrement de 0,05 bar à 0,2 bar, tout particulièrement de 0,095 bar à 0,15 bar.

Sans vouloir être liés à aucune théorie, les inventeurs sont d'avis que, lors de l'étape a) de mise en contact, le métal alcalino-terreux et le sel d'ammonium forment, respectivement, un oxyde de métal alcalino-terreux et de l'ammoniac (NH₃) qui réagissent avec les gaz acides des fumées de combustion. Grâce à cet enchainement réactionnel, la réduction de la concentration en gaz acides des fumées de combustion par la composition pulvérulente est très efficace.

La composition chimique des gaz acides dépend de la composition des déchets à incinérer. Au sens de la présente invention, on entend par "gaz acide", un gaz qui au contact de l'eau produit une solution aqueuse présentant un pH acide, *i.e.* un pH inférieure à 7.Typiquement, les gaz acides sont classés selon les cinq catégories suivantes :
- les gaz acides phosphorés comme l'acide phosphorique (H₃PO₄),
- les gaz acides carbonés comme le dioxyde de carbone (CO₂),
- les gaz acides nitrés tels que les oxydes d'azote (NOₓ), le cyanure d'hydrogène (HCN) et leurs mélanges,
- les gaz acides soufrés tels que le dioxyde de soufre (SO₂), le sulfure d'hydrogène (H₂S) et leurs mélanges, et
- les gaz acides halogénés tels que le fluorure d'hydrogène (HF), le difluor (F₂), le chlorure d'hydrogène (HCl), le dichlore (Cl₂), le bromure d'hydrogène (HBr), le dibrome (Br₂), le iodure d'hydrogène (Hl), le diiode (I₂) et leurs mélanges en particulier le fluorure d'hydrogène (HF), le chlorure d'hydrogène (HCl), le bromure d'hydrogène (HBr) et leurs mélanges et tout particulièrement le chlorure d'hydrogène (HCl).

Selon un mode de réalisation, les gaz acides peuvent être choisis parmi H₃PO₄, CO₂, les NOₓ, HCN, SO₂, H₂S, HF, F₂, HCl, Cl₂, HBr, Br₂, HI, I₂ et leurs mélanges, en particulier choisis parmi CO₂, les NOₓ, HCN, SO₂, H₂S, HF, HCl, HBr et leurs mélanges.

Selon un mode de réalisation spécifique, les gaz acides peuvent être choisis parmi les NOₓ, SO₂, HCl et leurs mélanges.

Ce mode de réalisation spécifique est très avantageux car la composition pulvérulente réduit efficacement et en une seule fois la concentration en NOx, en SO₂, en HCl, ou en leurs mélanges dans lesdites fumées de combustion. En effet, lors de l'étape a) de mise en contact l'ammoniac réagit avec les NOx pour former de l'azote (N₂) et de l'eau (H₂O), et l'oxyde de métal alcalino-terreux réagit avec le SO₂ par réaction de sulfatation et avec le HCl par réaction de chlorination.

En particulier le procédé selon l'invention permet une réduction efficace de de la concentration en SO₂. En effet la réaction de sulfatation est thermodynamiquement favorisée en présence de HCl et dans les conditions opératoires de l'étape a) de mise en contact.

Avantageusement, le sel de métal alcalino-terreux peut comprendre un cation choisi parmi un cation de magnésium, un cation de calcium et leurs mélanges, de préférence peut être le cation de calcium. Typiquement l'anion du sel de métal alcalino-terreux peut être choisi parmi un acétate, un acrylate, un carbonate, un formate, un propionate et leurs mélanges, en particulier parmi un acétate, un acrylate, un carbonate et leurs mélanges, plus particulièrement l'anion est un carbonate.

Selon un mode de réalisation spécifique, le sel de métal alcalino-terreux est un sel de calcium, en particulier le carbonate de calcium.

Le carbonate de calcium peut provenir de la craie, du calcaire, de la chaux, d'un déchet industriel et de leurs mélanges, en particulier de la chaux, d'un déchet industriel et de leur mélange, plus particulièrement de la chaux.

Par exemple, le déchet industriel peut être choisi parmi les boues minérales, en particulier les boues minérales composées majoritairement de carbonate de calcium et pouvant, si nécessaire, être transformées en un réactif pulvérulent grâce à un ou plusieurs traitements chimiques adaptés. Les traitements chimiques sont ceux connus de l'homme du métier tels que, par exemple, un lavage, un séchage, des traitements physico-chimiques. Une boue de décarbonatation, une boue d'épuration primaire de saumures, et leur mélange sont tout à fait adaptés pour être mis en oeuvre dans la présente invention.

La boue de décarbonatation est un déchet non dangereux classiquement généré lors de l'opération de décarbonatation de l'eau, opération mise en oeuvre sur les sites industriels nécessitant des approvisionnements en eau adoucie. Chacun de ces sites peut générer de 1000 à 3000 tonnes/an de boue de décarbonatation. De façon avantageuse, utiliser une boue de décarbonatation comme source de carbonate de calcium permet donc de valoriser un déchet qui n'est pas valorisé à l'heure actuelle et de créer une économie circulaire par la disponibilité de ce déchet autour des incinérateurs. Cela permet également de substituer une ressource naturelle (la craie, le calcaire et la chaux) par un déchet. La boue de décarbonatation comprend généralement environ 65% de carbonate de calcium, le restant étant de l'eau. Pour être utilisée dans l'étape a) du procédé de l'invention, elle peut donc être séchée de sorte que la teneur en carbonate de calcium dans la boue séchée soit comprise entre 94% et 99,6%.

La boue d'épuration primaire de saumures est un déchet résultant de l'électrolyse dans la fabrication de chlore. Elle contient des carbonates de calcium et de magnésium ainsi que des traces de polluants, sels, éventuellement métaux. Les polluants, les sels et les éventuels métaux peuvent être séparés par des opérations spécifiques, connues de l'homme du métier, telles que des lavages successifs ou des traitements physico-chimiques. L'eau peut être enlevée par séchage.

De façon avantageuse, dans les conditions opératoires de l'étape a) de mise en contact, la cinétique d'oxydation des sels de calcium en oxyde de calcium (CaO) et la cinétique des réaction entre CaO et les gaz acides sont très rapides. La réduction de la concentration en gaz acides est alors très efficace. Ceci est d'autant plus vrai si le sel de calcium est le carbonate de calcium et les gaz acides comprennent du SO₂ et/ou du HCl.

Selon un mode de réalisation, le sel d'ammonium peut être choisi parmi le carbonate d'ammonium, le chlorure d'ammonium, le sulfate d'ammonium, le sulfure d'ammonium et leurs mélanges, en particulier le sel d'ammonium est le sulfate d'ammonium.

De façon avantageuse, dans les conditions opératoires du procédé selon l'invention, la cinétique de formation d'ammoniac à partir du sulfate d'ammonium est rapide. La réduction de la concentration en gaz acides est alors très efficace. Ceci est d'autant plus vrai si les gaz acides comprennent des NOx.

Le sulfate d'ammonium présente également une propriété d'anti-encrassement. L'encrassement des unités de combustion est causé par la formation et le dépôt de cendres lors de l'incinération de déchets comprenant des concentrations élevées en chlore et en substance alcaline. L'encrassement a un impact économique important car il altère le bon fonctionnement de la chaudière de l'unité de combustion ce qui limite la production d'énergie par ladite chaudière. De plus si l'encrassement devient trop important, il impose l'arrêt complet de la chaudière et ainsi de l'unité de combustion pour maintenance. Grâce à sa propriété d'anti-encrassement, le sulfate d'ammonium maintient avantageusement le bon fonctionnement et les performances énergétiques de la chaudière. Le sulfate d'ammonium augmente également l'intervalle de temps entre deux arrêts complet pour maintenance de l'unité de combustion.

Selon un mode de réalisation, la composition pulvérulente peut comprendre, par rapport au poids total de la composition, au moins 50% de sel de métal alcalino-terreux, en particulier de 60% à 90% de sel de métal alcalino-terreux, tout particulièrement de 69% à 71% de sel de métal alcalino-terreux, et le ratio massique entre le sel d'ammonium et le sel de métal alcalino-terreux est de 0,05 à 0,3, en particulier de 0,15 à 0,25, tout particulièrement de 0,20 à 0,22.

De façon avantageuse, la composition pulvérulente de ce mode de réalisation permet une réduction efficace de la concentration en gaz acides contenus dans les fumées de combustion sans altérer le fonctionnement de l'unité de combustion.

En effet lorsque le pourcentage massique en sel alcalino-terreux dans la composition pulvérulente et le ratio massique entre le sel d'ammonium et le sel de métal alcalino-terreux sont inférieures aux valeurs indiquées ci-dessus alors l'ammoniac et l'oxyde de métal alcalino-terreux peuvent être en défaut par rapport aux gaz acides de sorte que la réduction de la concentration en gaz acides dans les fumées est moins efficace.

De même, lorsque le ratio massique entre le sel d'ammonium et le sel de métal alcalino-terreux est supérieur à aux valeurs indiquées ci-dessus alors l'ammoniac, qui est un composé corrosif et toxique, peut être en excès par rapport aux gaz acides. Cet excès d'ammoniac peut, par exemple, détériorer l'unité de combustion et nécessite une unité de traitement spécifique.

Selon un mode de réalisation, la composition pulvérulente peut comprendre du carbonate de calcium et du sulfate d'ammonium.

Selon une variante de ce mode de réalisation, la composition pulvérulente peut comprendre, par rapport au poids total de la composition, au moins 50% de carbonate de calcium, en particulier de 60% à 90% de carbonate de calcium et le ratio massique entre le sulfate d'ammonium et le carbonate de calcium est de 0,05 à 0,3, en particulier de 0,15 à 0,25.

Plus particulièrement, la composition pulvérulente peut comprendre, par rapport au poids total de la composition, de 69% à 71% de carbonate de calcium, et le ratio massique entre le sulfate d'ammonium et le carbonate de calcium est de 0,20 à 0,22.

Selon un mode de réalisation la composition pulvérulente selon l'invention peut comprendre en outre un additif. Cet additif peut être choisi parmi une argile, un sel de brome et leurs mélanges, en particulier l'additif est une argile.

Au sens de la présente invention, on entend par "argile" un composé chimique à base de silicates ou aluminosilicates hydratés de structure lamellaire. Typiquement l'argile peut être choisie parmi l'amésite, l'antigorite, la beïdellite, la berthiérine, la céladonite, la chrysolite, la cronstedtite, la damouzite, la dickite, la glauconite, la halloysite, l'illite, la kaolinite, la lizardite, la montmorillonite, la muscovite, la nacrite, la nontronite, la paragonite, la pyrophyllite, la séricite, la vermiculite et leurs mélanges, en particulier parmi l'antigorite, la chrysolite, la damouzite, la halloysite, la kaolinite, la montmorillonite, la nacrite, la pyrophyllite, la vermiculite et leurs mélanges, tout particulièrement la kaolinite.

L'argile, en particulier la kaolinite, présente avantageusement une propriété d'anti-corrosion. La corrosion d'un élément de l'unité de combustion, en particulier la chaudière est causée par des dépôts de composés inorganiques présents dans certains déchets. La corrosion diminue la sécurité de l'unité de combustion et a impact économique important car nécessité le remplacement de l'élément corrodé de l'unité de combustion. Grâce à sa propriété d'anti-corrosion, l'argile, en particulier le kaolin permet de maintenir la sécurité de l'unité de combustion et limite le remplacement des éléments de l'unité de combustion.

Au sens de la présente invention, on entend par "sel de brome" un composé chimique comprenant un anion et un cation bromure. Typiquement le sel de brome peut être choisi parmi le bromure de sodium, le bromure de potassium, le bromure de calcium et leurs mélanges, en particulier le bromure de sodium.

Certains déchets industriels peuvent comprendre du mercure qui se retrouve dans les fumées de combustion produites lors de l'incinération de ces déchets. A cause de la toxicité aigüe du mercure, la valeur maximale de mercure autorisée dans les fumées d'unités de combustion est très faible (0,05 mg/Nm³). Dans les conditions opératoires de l'étape a) de mise en contact, le sel de brome oxyde le mercure présent dans les fumées de combustion pour former du mercure oxydé qui peut ensuite être facilement capté par du charbon actif ou des laveurs acides. De façon avantageuse, le sel de brome facilite la diminution de la concentration en mercure dans les fumées de combustion.

Lorsque la composition pulvérulente selon l'invention comprend en outre un additif tel que défini ci-dessus, elle comprend avantageusement, par rapport au poids total de la composition, au moins 50% de sel de métal alcalino-terreux, en particulier de 60% à 90% de sel de métal alcalino-terreux, tout particulièrement de 69% à 71% de sel de métal alcalino-terreux, le ratio massique entre le sel d'ammonium et le sel de métal alcalino-terreux est de 0,05 à 0,3, en particulier de 0,15 à 0,25, tout particulièrement de 0,20 à 0,22, et le ratio massique entre l'additif et le sel de métal alcalino-terreux est de 0,05 à 0,3, en particulier de 0,15 à 0,25, tout particulièrement de 0,20 à 0,22.

Selon une variante de ce mode de réalisation particulier, l'additif est une argile et la composition pulvérulente comprend, par rapport au poids total de la composition, au moins 50% de sel de métal alcalino-terreux, en particulier de 60% à 90% de sel de métal alcalino-terreux, tout particulièrement de 69% à 71% de sel de métal alcalino-terreux, le ratio massique entre le sel d'ammonium et le sel de métal alcalino-terreux est de 0,05 à 0,3, en particulier de 0,15 à 0,25, tout particulièrement de 0,20 à 0,22, et le ratio massique entre l'argile et le sel de métal alcalino-terreux est de 0,05 à 0,3, en particulier de 0,15 à 0,25, tout particulièrement de 0,20 à 0,22. De préférence le sel de métal alcalino-terreux est du carbonate de calcium et le sel d'ammonium est du sulfate d'ammonium.

Dans cette variante, l'argile est de préférence la kaolinite. Ainsi la composition pulvérulente peut comprendre de la kaolinite et, par rapport au poids total de la composition, au moins 50% de carbonate de calcium, en particulier de 60% à 90% de carbonate de calcium, le ratio massique entre le sulfate d'ammonium et le carbonate de calcium est de 0,05 à 0,3, en particulier de 0,15 à 0,25 et le ratio massique entre la kaolinite et le carbonate de calcium est de 0,05 à 0,3, en particulier de 0,15 à 0,25.

Selon une variante particulière, la composition pulvérulente peut comprendre de la kaolinite et, par rapport au poids total de la composition, de 69% à 71% de carbonate de calcium, le ratio massique entre le sulfate d'ammonium et le carbonate de calcium est de 0,20 à 0,22 et le ratio massique entre la kaolinite et le carbonate de calcium est de 0,20 à 0,22.

A l'issue de l'étape a) de mise en contact des gaz acides contenus dans les fumées de combustion avec la composition pulvérulente, les fumées peuvent comprendre une concentration résiduelle en gaz acides. Ainsi, selon un mode de réalisation particulier, le procédé de l'invention peut comprendre, après l'étape a) de mise en contact, une étape b) de neutralisation des gaz acides résiduels dans les fumées issues de l'étape a).

L'étape b) de neutralisation des gaz acides résiduels est typiquement réalisée à une température inférieure ou égale à 250°C par la mise en contact des fumées issues de l'étape a) avec de la chaux, du bicarbonate de sodium, de la soude, un agent réducteur de type ammoniac ou urée, et leurs mélanges.

La mise en contact des fumées issues de l'étape a) avec de la chaux, du bicarbonate de sodium, de la soude et leurs mélanges, est particulièrement efficace pour réduire la concentration résiduelle en HCl et/ou SO₂.

La mise en contact des fumées issues de l'étape a) avec un agent réducteur de type ammoniac ou urée, et leurs mélanges est particulièrement efficace pour réduire la concentration résiduelle en NOx. Cette mise en contact peut être suivie d'un passage sur une unité de réduction sélective catalytique.

Le procédé selon l'invention permet de réduire la concentration en gaz acides dans les fumées de combustion, *i.e.* des fumées produites par une unité de combustion **1** comme représentée de façon schématique à la figure 1. Une unité de combustion **1** comprend typiquement, dans le sens du flux, un four à combustion **11,** par exemple rotatif, une chambre de post-combustion des fumées **12,** une unité de refroidissement des fumées comprenant une chaudière **13** puis une tour de refroidissement **14,** une unité de neutralisation des fumées refroidies **15,** une unité de filtration des fumées **16,** une unité de ventilation et soutirage de fumée **17** et une cheminée **18.**

Typiquement l'incinération des déchets est réalisée dans le four à combustion **11** lors d'une étape d'incinération. L'étape d'incinération est classiquement réalisée à une température allant de 850°C à 1000°C et produit les fumées de combustion qui contiennent les gaz acides. Ces fumées sont ensuite envoyées dans la chambre de post-combustion **12** pour y être brulées lors d'une étape de post-combustion. L'étape de post-combustion est classiquement réalisée à une température proche de la température de l'étape d'incinération. Typiquement la température dans le four à combustion **11** est de 850°C à 1200°C et la température dans la chambre de post-combustion **12** est de 900°C à 1150°C.

Selon un mode de réalisation particulier, l'étape a) de mise en contact du procédé selon l'invention est réalisée dans le four à combustion **11** et/ou dans la chambre de post-combustion **12** de l'unité de combustion **1.**

En effet, la température lors de l'étape d'incinération dans le four à combustion **11** et/ou lors de l'étape de post-combustion dans la chambre de post-combustion **12** est telle que l'étape a) de mise en contact du procédé selon l'invention peut y être avantageusement réalisée.

Dans ce mode de réalisation particulier, il n'est donc pas nécessaire d'ajouter à l'unité de combustion **1** une unité spécifiquement dédiée la réduction de la concentration en gaz acides dans les fumées de combustion. De plus, dans ce mode de réalisation particulier, il n'est pas nécessaire de réchauffer ultérieurement les fumées de combustion pour les traiter. Ainsi, selon ce mode de réalisation particulier, le rendement énergétique du procédé selon l'invention est augmenté.

Typiquement la composition pulvérulente peut être injectée dans le four à combustion **11,** à l'interface entre le four de combustion **11** et la chambre de post-combustion **12** et/ou dans la chambre de post-combustion **12.**

La poudre pulvérulente peut être injectée à l'aide d'un dispositif d'injection tel qu'une vis doseuse volumétrique, une vis doseuse pondérale ou une vis doseuse microdoseuse.

Grâce à sa granulométrie, la composition pulvérulente présente des propriétés de coulabilité permettant sa bonne injection.

Dans un mode de réalisation particulier, l'étape b) de neutralisation des gaz acides résiduels dans les fumées issues de l'étape a) de mise en contact peut être réalisée dans l'unité de neutralisation des fumées refroidies **15.**

Dans ce mode de réalisation particulier, il n'est donc pas nécessaire d'ajouter à l'unité de combustion **1** une unité spécifiquement dédiée à la neutralisation des gaz acides résiduels dans les fumées issues de l'étape a) de mise en contact. Ainsi, selon ce mode de réalisation particulier, le rendement énergétique du procédé selon l'invention est augmenté.

Un second objet de l'invention est une composition pulvérulente comprenant un sel de métal alcalino-terreux et un sel d'ammonium

La composition pulvérulente selon le second objet de l'invention est tel que décrit ci-dessus en lien avec le procédé de traitement de fumées de combustion comprenant des gaz acides, qui est le premier objet de l'invention.

Sauf indication contraire ou incompatibilité apparente, les modes de réalisation de l'invention décrits ci-dessus peuvent être combinés les uns avec les autres.

L'invention est décrite plus en détail ci-après, à l'aide des exemples suivants qui ne sont nullement limitatifs mais sont donnés à titre d'exemple uniquement.

### Exemples

Cet exemple décrit un test industriel de la composition pulvérulente selon l'invention mené sur une unité de combustion **1** qui est une ligne existante d'incinération de déchets dangereux.

L'unité de combustion **1** utilisée est représentée sur le schéma de la Figure 1 et est composée des éléments suivants :
- un four à combustion rotatif **11,**
- une chambre de post-combustion **12,**
- une chaudière **13** avec injection d'urée solide dans le premier parcours,
- une tour de refroidissement des fumées **14,**
- une unité de neutralisation des fumées refroidies **15,**
- une unité de filtration des fumées **16** comprenant deux filtres à manche,
- une unité de ventilation et soutirage de fumée **17,** et
- une cheminée **18.**

De la chaux est injectée dans l'unité de neutralisation des fumées refroidies **15.**

Pour la réalisation des essais, la composition pulvérulente testée comprend :
- 70% de carbonate de calcium,
- 15% de sulfate d'ammonium, et
- 15% kaolin
et présente une valeur d90 de 47,6 µm.

La valeur d90 de la composition pulvérulente est déterminée selon le protocole suivant :
Un échantillon de la composition pulvérulente est mélangé avec de l'eau distillée dans un bac externe à ultrason et mis en stabilisation pendant 10 minutes.
L'échantillon stabilisé est introduit dans une cellule de mesure dite *"small volume"* (120 ml) d'un granulomètre laser Malvern-Mastersizer 2000. La vitesse de circulation est de 3000 rpm. La quantité d'échantillon stabilisé introduit et analysé correspond à l'obtention du taux d'obscuration du laser dans le rouge compris entre 15 et 17 %.
L'obscuration du laser dans le rouge est stabilisée pendant 20 minutes avant la mesure. Malgré cette stabilisation de 20 minutes, une forte agglomération est présente mais n'empêche pas la mesure d'être effectuée.

La composition pulvérulente testée est stockée dans d'un silo 20 tonnes de capacité. L'injection en bas de la chambre de post-combustion **12** (1^{er} tiers) s'est faite en deux points diamétralement opposés de manière à optimiser le contact intime entre la composition pulvérulente et les gaz acides à neutraliser, à savoir le SO₂, HCl et les NOx. Cette injection s'est faite via l'utilisation d'une vis doseuse, elle-même située en aval d'un peson placé sous le silo permettant de contrôler et réguler les débits massiques d'injection. Pour ce faire, une régulation avec des valeurs seuils fixées à 150 mg/Nm³ pour le SO₂ et HCl (mesures réalisées en sortie de la chaudière **13**) a été mise en place avec des débits massiques correspondants variant de 20 kg/h à 200 kg/h selon les valeurs mesurées au-dessus de 150 mg/Nm³. Afin de connaître les efficacités de réduction de concentration en SO₂, HCl et NOx, des mesures en amont, *i.e.* avant injection de la composition pulvérulente testée, dans la chambre de post-combustion **12** et des mesures en aval en sortie chaudière **13** ont été réalisées.

Durant les essais la température dans la chambre de combustion est de 950°C.

Le [Tableau 1] présente l'ensemble des résultats obtenus sur treize essais avec injection de la composition pulvérulente testée.

**[Tableau 1]**

| Essai n° | [SO₂] en amont (mg/Nm³) | [SO₂] en aval (mg/Nm³) | Efficacité (%) | [HCl] en amont (mg/Nm³) | [HCl] en aval (mg/Nm³) | Efficacité (%) | [NOx] en amont (mg/Nm³) | [NOx] en aval (mg/Nm³) | Efficacité (%) |
|---|---|---|---|---|---|---|---|---|---|
| 1 | 937,5 | 247,2 | 73,6 | 961,2 | 523,1 | 45,6 | 923,6 | 61,7 | 93,3 |
| 2 | 837,6 | 229,3 | 72,6 | 720,2 | 460,9 | 36,0 | 476 | 82,2 | 82,7 |
| 3 | 1138 | 125,5 | 89,0 | 376,7 | 230,7 | 38,8 | 806 | 55 | 93,2 |
| 4 | 468,8 | 92,1 | 80,4 | 739,7 | 499,9 | 32,4 | 487,3 | 63,3 | 87,0 |
| 5 | 663,7 | 97,5 | 85,3 | 629,9 | 470,1 | 25,4 | 350,5 | 39,9 | 88,6 |
| 6 | 608,8 | 37,4 | 93,9 | 782 | 570,2 | 27,1 | 337,3 | 32,1 | 90,5 |
| 7 | 266,9 | 49,8 | 81,3 | 597,2 | 429,9 | 28,0 | 268,3 | 26,1 | 90,3 |
| 8 | 325,5 | 79,9 | 75,5 | 309,2 | 230,3 | 25,5 | 247,4 | 31 | 87,5 |
| 9 | 755,3 | 145,1 | 80,8 | 448 | 311,1 | 30,6 | 298,2 | 39,1 | 86,9 |
| 10 | 396,6 | 105,1 | 73,5 | 807,1 | 529,9 | 34,3 | 336,4 | 32,5 | 90,3 |
| 11 | 1259 | 168,3 | 86,6 | 1273 | 870,2 | 31,6 | 299,2 | 23,1 | 92,3 |
| 12 | 1350 | 375,2 | 72,2 | 1537 | 920,1 | 40,1 | 503,1 | 62,1 | 87,7 |
| 13 | 817,9 | 199 | 75,7 | 1649 | 998,2 | 39,5 | 334,1 | 40,9 | 87,8 |
| | | | 80,0 | | | 33,5 | | | 89,1 |

Il apparaît que :
- l'efficacité moyenne de de réduction de concentration SO₂ est de 80%,
- l'efficacité moyenne de de réduction de concentration HCl est de 33%, et
- l'efficacité moyenne de de réduction de concentration des NOx est de 89%.

La composition pulvérulente testée permet donc une réduction efficace du HCl et une réduction très efficace du SO₂ et des NOx.

De plus, la quantité de chaux injectée dans l'unité de neutralisation des fumées refroidies **15** lors des treize essais est environ quatre fois inférieure à la quantité de chaux qu'il aurait fallu injecter dans cette unité de neutralisation **15** si la composition pulvérulente testée n'avait pas été injecté dans la chambre de post-combustion **12.**

La composition pulvérulente testée permet donc une diminution important de la consommation de chaux. Elle permet donc une diminution importante des coûts et des risques liés à cette matière première et une diminution des coûteux arrêts de maintenance.

## Revendications

1. Procédé de traitement de fumées de combustion comprenant des gaz acides, ledit procédé comprenant une étape a) de mise en contact desdits des gaz acides avec une composition pulvérulente comprenant un sel de métal alcalino-terreux et un sel d'ammonium sous atmosphère oxydante et à une température supérieure ou égale à 850°C,
dans lequel le sel d'ammonium est choisi parmi le carbonate d'ammonium, le chlorure d'ammonium, le sulfate d'ammonium, le sulfure d'ammonium et leurs mélanges, et
dans lequel la composition pulvérulente comprend, par rapport au poids total de la composition, au moins 50% de sel de métal alcalino-terreux et le ratio massique entre le sel d'ammonium et le sel de métal alcalino-terreux est de 0,05 à 0,3.

2. Procédé selon la revendication 1 dans lequel les gaz acides sont choisis parmi H₃PO₄, CO₂, les NOₓ, HCN, SO₂, H₂S, HF, F₂, HCl, Cl₂, HBr, Br₂, HI, I₂ et leurs mélanges.

3. Procédé selon la revendication 1 ou la revendication 2 dans lequel le sel de métal alcalino-terreux comprend un cation choisi parmi un cation de magnésium, un cation de calcium et leurs mélanges.

4. Procédé selon l'une des revendications précédentes dans lequel le sel d'ammonium est le sulfate d'ammonium.

5. Procédé selon l'une des revendications précédentes dans lequel la composition pulvérulente comprend du carbonate de calcium et du sulfate d'ammonium.

6. Procédé selon la revendication 5 dans lequel le carbonate de calcium provient de la craie, du calcaire, de la chaux, d'un déchet industriel, et de leurs mélanges.

7. Procédé selon la revendication 6 dans lequel le déchet industriel est une boue minérale.

8. Procédé selon la revendication 7 dans lequel la boue minérale est une boue de décarbonatation, une boue d'épuration primaire de saumures, et leur mélange.

9. Procédé selon l'une des revendications précédentes dans lequel la composition pulvérulente comprend en outre un additif, en particulier un additif choisi parmi une argile, un sel de brome et leurs mélanges.

10. Procédé selon la revendication 9 dans lequel la composition pulvérulente comprend une argile et, par rapport au poids total de la composition, au moins 50% de sel de métal alcalino-terreux, le ratio massique entre le sel d'ammonium et le sel de métal alcalino-terreux est de 0,05 à 0,3, et le ratio massique entre l'argile et le sel de métal alcalino-terreux est de 0,05 à 0,3.

11. Procédé selon l'une des revendications précédentes dans lequel l'étape a) de mise en contact est réalisée dans un four à combustion (11) et/ou dans une chambre de post-combustion (12) d'une unité de combustion (1).

12. Composition pulvérulente comprenant un sel de métal alcalino-terreux et un sel d'ammonium comprenant, par rapport au poids total de la composition, au moins 50% de sel de métal alcalino-terreux et le ratio massique entre le sel d'ammonium et le sel de métal alcalino-terreux est de 0,1 à 0,3, dans laquelle le sel d'ammonium est choisi parmi le carbonate d'ammonium, le chlorure d'ammonium, le sulfate d'ammonium, le sulfure d'ammonium et leurs mélanges.

13. Composition pulvérulente selon la revendication 12 dans laquelle le sel de métal alcalino-terreux comprend un cation choisi parmi un cation de magnésium, un cation de calcium et leurs mélanges.

14. Composition pulvérulente selon la revendication 12 ou la revendication 13 dans laquelle le sel d'ammonium est le sulfate d'ammonium.

15. Composition pulvérulente selon l'une quelconque des revendications 12 à 14 comprenant du carbonate de calcium et du sulfate d'ammonium.

16. Composition pulvérulente selon la revendication 15 dans laquelle le carbonate de calcium provient de la craie, du calcaire, de la chaux, d'un déchet industriel, et de leurs mélanges.

17. Composition pulvérulente selon la revendication 16 dans laquelle le déchet industriel est une boue minérale.

18. Composition pulvérulente selon la revendication 17 dans laquelle la boue minérale est une boue de décarbonatation, une boue d'épuration primaire de saumures, et leur mélange.

19. Composition pulvérulente selon l'une quelconque des revendications 12 à 19 comprenant en outre additif, en particulier un additif choisi parmi une argile, un sel de brome et leurs mélanges.

20. Composition pulvérulente selon la revendication 19 comprenant une argile et, par rapport au poids total de la composition, au moins 50% de sel de métal alcalino-terreux, le ratio massique entre le sel d'ammonium et le sel de métal alcalino-terreux est de 0,1 à 0,3, et le ratio massique entre l'argile et le sel de métal alcalino-terreux est de 0,1 à 0,3.

## Patentansprüche

1. Verfahren zur Behandlung von Verbrennungsabgasen, die saure Gase enthalten, wobei das Verfahren einen Schritt a) des Inkontaktbringens der sauren Gase mit einer pulverförmigen Zusammensetzung umfasst, die ein Erdalkalimetallsalz und ein Ammoniumsalz enthält, in einer oxidierenden Atmosphäre und bei einer Temperatur von 850 °C oder mehr,
wobei das Ammoniumsalz aus Ammoniumcarbonat, Ammoniumchlorid, Ammoniumsulfat, Ammoniumsulfid und deren Mischungen gewählt ist, und
wobei die pulverförmige Zusammensetzung, bezogen auf das Gesamtgewicht der Zusammensetzung, wenigstens 50 % Erdalkalimetallsalz umfasst und das Massenverhältnis von Ammoniumsalz zu Erdalkalimetallsalz 0,05 bis 0,3 beträgt.

2. Verfahren nach Anspruch 1, wobei die sauren Gase aus H₃PO₄, CO₂, NOₓ, HCN, SO₂, H₂S, HF, F₂, HCl, Cl₂, HBr, Br₂, HI, I₂ und deren Mischungen gewählt sind.

3. Verfahren nach Anspruch 1 oder 2, wobei das Erdalkalimetallsalz ein Kation umfasst, das aus einem Magnesiumkation, einem Kalziumkation und deren Mischungen gewählt ist.

4. Verfahren nach einem der vorhergehenden Ansprüche, wobei das Ammoniumsalz Ammoniumsulfat ist.

5. Verfahren nach einem der vorhergehenden Ansprüche, wobei die pulverförmige Zusammensetzung Calciumcarbonat und Ammoniumsulfat umfasst.

6. Verfahren nach Anspruch 5, wobei das Calciumcarbonat aus Kreide, Kalkstein, Kalk, Industrieabfällen und deren Mischungen stammt.

7. Verfahren nach Anspruch 6, wobei der Industrieabfall ein mineralischer Schlamm ist.

8. Verfahren nach Anspruch 7, wobei der mineralische Schlamm ein Dekarbonisierungsschlamm, ein Schlamm zur primären Reinigung von Salzlaugen und deren Mischungen ist.

9. Verfahren nach einem der vorhergehenden Ansprüche, wobei die pulverförmige Zusammensetzung ferner einen Zusatzstoff enthält, insbesondere einen Zusatzstoff, der aus einem Ton, einem Bromsalz und deren Mischungen gewählt ist.

10. Verfahren nach Anspruch 9, wobei die pulverförmige Zusammensetzung einen Ton und, bezogen auf das Gesamtgewicht der Zusammensetzung, wenigstens 50 % Erdalkalimetallsalz umfasst, wobei das Massenverhältnis von Ammoniumsalz zu Erdalkalimetallsalz 0,05 bis 0,3 beträgt und das Massenverhältnis von Ton zu Erdalkalimetallsalz 0,05 bis 0,3 beträgt.

11. Verfahren nach einem der vorhergehenden Ansprüche, wobei der Kontaktschritt a) in einem Verbrennungsofen (11) und/oder in einer Nachverbrennungskammer (12) einer Verbrennungseinheit (1) durchgeführt wird.

12. Pulverförmige Zusammensetzung, umfassend ein Erdalkalimetallsalz und ein Ammoniumsalz, umfassend, bezogen auf das Gesamtgewicht der Zusammensetzung, wenigstens 50 % Erdalkalimetallsalz und wobei das Massenverhältnis von Ammoniumsalz zu Erdalkalimetallsalz 0,1 bis 0,3 beträgt, wobei das Ammoniumsalz gewählt ist aus Ammoniumcarbonat, Ammoniumchlorid, Ammoniumsulfat, Ammoniumsulfid und deren Mischungen.

13. Pulverförmige Zusammensetzung nach Anspruch 12, wobei das Erdalkalimetallsalz ein Kation umfasst, das aus einem Magnesiumkation, einem Calciumkation und deren Mischungen gewählt ist.

14. Pulverförmige Zusammensetzung nach Anspruch 12 oder Anspruch 13, wobei das Ammoniumsalz Ammoniumsulfat ist.

15. Pulverförmige Zusammensetzung nach einem der Ansprüche 12 bis 14, welche Calciumcarbonat und Ammoniumsulfat enthält.

16. Pulverförmige Zusammensetzung nach Anspruch 15, wobei das Calciumcarbonat aus Kreide, Kalkstein, Kalk, Industrieabfällen und deren Mischungen stammt.

17. Pulverförmige Zusammensetzung nach Anspruch 16, wobei der Industrieabfall ein mineralischer Schlamm ist.

18. Pulverförmige Zusammensetzung nach Anspruch 17, wobei der mineralische Schlamm ein Dekarbonisierungsschlamm, ein Schlamm zur primären Reinigung von Salzlaugen und deren Mischungen ist.

19. Pulverförmige Zusammensetzung nach einem der Ansprüche 12 bis 19, welche ferner einen Zusatzstoff umfasst, insbesondere einen Zusatzstoff, der aus einem Ton, einem Bromsalz und deren Mischungen gewählt ist.

20. Pulverförmige Zusammensetzung nach Anspruch 19, umfassend einen Ton und, bezogen auf das Gesamtgewicht der Zusammensetzung, wenigstens 50 % Erdalkalimetallsalz, wobei das Massenverhältnis von Ammoniumsalz zu Erdalkalimetallsalz 0,1 bis 0,3 beträgt und das Massenverhältnis von Ton zu Erdalkalimetallsalz 0,1 bis 0,3 beträgt.

## Claims

1. Method for treating combustion flue gas comprising acid gases, said method comprising a contact step a) of placing said acid gases in contact with a powder composition comprising an alkaline earth metal salt and an ammonium salt in an oxidizing atmosphere and at a temperature greater than or equal to 850°C wherein the ammonium salt is selected among ammonium carbonate, ammonium chloride, ammonium sulfate, ammonium sulfide, and mixtures thereof,
wherein the powder composition comprises, relative to the total weight of the composition, at least 50% of alkaline earth metal salt, and the mass ratio between the ammonium salt and the alkaline earth metal salt is from 0.05 to 0.3.

2. Method according to claim 1, wherein the acid gases are selected among H₃PO₄, CO₂, NOₓ, HCN, SO₂, H₂S, HF, F₂, HCl, Cl₂, HBr, Br₂, HI, I₂, and mixtures thereof.

3. Method according to claim 1 or claim 2, wherein the alkaline earth metal salt comprises a cation selected among a magnesium cation, a calcium cation, and mixtures thereof.

4. Method according to one of the preceding claims, wherein the ammonium salt is ammonium sulfate.

5. Method according to one of the preceding claims, wherein the powder composition comprises calcium carbonate and ammonium sulfate.

6. Method according to claim 5, wherein the calcium carbonate comes from chalk, limestone, lime, industrial waste, and mixtures thereof.

7. Method according to claim 6, wherein the industrial waste is mineral sludge.

8. Method according to claim 7, wherein the mineral sludge is decarbonation sludge, sludge from primary brine purification, and a mixture thereof.

9. Method according to one of the preceding claims, wherein the powder composition further comprises an additive, in particular an additive selected among a clay, a bromine salt, and mixtures thereof.

10. Method according to claim 9, wherein the powder composition comprises a clay and, relative to the total weight of the composition, at least 50% of alkaline earth metal salt, the mass ratio between the ammonium salt and the alkaline earth metal salt is from 0.05 to 0.3, and the mass ratio between the clay and the alkaline earth metal salt is from 0.05 to 0.3.

11. Method according to one of the preceding claims, wherein the contact step a) is carried out in a combustion furnace (11) and/or in a post-combustion chamber (12) of a combustion unit (1).

12. Powder composition comprising an alkaline earth metal salt and an ammonium salt comprising, relative to the total weight of the composition, at least 50% of alkaline earth metal salt, and the mass ratio between the ammonium salt and the alkaline earth metal salt is from 0.1 to 0.3,
wherein the ammonium salt is selected among ammonium carbonate, ammonium chloride, ammonium sulfate, ammonium sulfide, and mixtures thereof.

13. Powder composition according to claim 12, wherein the alkaline earth metal salt comprises a cation selected among a magnesium cation, a calcium cation, and mixtures thereof.

14. Powder composition according to claim 12 or claim 13, wherein the ammonium salt is ammonium sulfate.

15. Powder composition according to any one of claims 12 to 14, comprising calcium carbonate and ammonium sulfate.

16. Powder composition according to claim 15, wherein the calcium carbonate comes from chalk, limestone, lime, industrial waste, and mixtures thereof.

17. Powder composition according to claim 16, wherein the industrial waste is mineral sludge.

18. Powder composition according to claim 17, wherein the mineral sludge is decarbonation sludge, sludge from primary brine purification, and a mixture thereof.

19. Powder composition according to any one of claims 12 to 19, further comprising an additive, in particular an additive selected among a clay, a bromine salt, and mixtures thereof.

20. Powder composition according to claim 19, comprising a clay and, relative to the total weight of the composition, at least 50% of alkaline earth metal salt, the mass ratio between the ammonium salt and the alkaline earth metal salt is from 0.1 to 0.3, and the mass ratio between the clay and the alkaline earth metal salt is from 0.1 to 0.3.
